# EUROPÄISCHE PATENTSCHRIFT

(11) **EP 3 837 430 B1**
(45) Veröffentlichungstag und Bekanntmachung des Hinweises auf die Patenterteilung: **26.06.2024**
(21) Anmeldenummer: 19778849.0
(22) Anmeldetag: 16.09.2019
(51) Int. Cl.: F01D 25/28, F02C 3/00, F02C 6/08, F02C 7/20

(54) **VERFAHREN ZUR MONTAGE EINER GASTURBINENANORDNUNG AUF EINEM FUNDAMENT**
METHOD FOR ASSEMBLING A GAS TURBINE ARRANGEMENT ON A FOUNDATION
PROCÉDÉ D'ASSEMBLAGE D'UN AGENCEMENT DE TURBINE À GAZ SUR UNE FONDATION

(30) Priorität: 18.10.2018 DE 102018217824
(43) Veröffentlichungstag der Anmeldung: 23.06.2021
(73) Patentinhaber: Siemens Energy Global GmbH & Co. KG, 81739 München (DE)
(72) Erfinder: WALK, Oliver Tobias, 45147 Essen (DE); WEIDNER, Frank, 45481 Mülheim an der Ruhr (DE)
(86) Internationale Anmeldenummer: PCT/EP2019/074668
(87) Internationale Veröffentlichungsnummer: WO 2020/078632

(56) Entgegenhaltungen:
- EP-A1- 2 634 381
- CH-A2- 701 018
- US-A1- 2010 162 726
- US-A1- 2016 186 659
- Stefanie: "Stadtwerke nehmen neue Gasturbinen in Betrieb / Stadtwerke Rostock sichern Versorgung mit Fernwärme und Strom durch Modernisierung ihres Kraftwerkes", Rostock-Heute, 6 October 2017 (2017-10-06), pages 1-3, XP055795609, Retrieved from the Internet: URL:https://www.rostock-heute.de/stadtwerk e-rostock-kraftwerk-fernwaerme-strom-moder nisierung/95880 [retrieved on 2021-04-15]

## Beschreibung

Die Erfindung betrifft ein Verfahren zur Montage einer Gasturbinenanordnung erster Bauart an einer Position eines bestehenden Kraftwerks, an der zuvor eine Gasturbinenanordnung einer zweiten Bauart auf einem speziell für diese zweite Bauart ausgelegten Fundament montiert war, wobei die Gasturbinenanordnung zumindest ein Gehäuse, einen Verdichter, eine Brennkammer, eine Gasturbine und eine Mehrzahl von außen entlang des Gehäuses geführten Abblase- und Entnahmeleitungen umfasst. Ferner betrifft die Erfindung eine Gasturbinenanordnung mit zumindest einem sich in einer Längsrichtung erstreckenden Gehäuse, einem Verdichter, einer Brennkammer und einer Gasturbine, die in der Längsrichtung hintereinander angeordnet sind, und einer Mehrzahl von außen entlang des Gehäuses geführten Abblase- und Entnahmeleitungen, die jeweils zumindest einen sich in Längsrichtung und im Wesentlichen parallel zum Gehäuse erstreckenden Leitungsabschnitt aufweisen und endseitig über Gehäuseflansche mit dem Gehäuse verbunden sind.

Im Stand der Technik wird eine zumindest ein Gehäuse, einen Verdichter, eine Brennkammer, eine Gasturbine und eine Mehrzahl von außen entlang des Gehäuses geführte Abblase- und Entnahmeleitungen umfassende Gasturbinenanordnung stets auf einem speziell für diese Gasturbinenanordnung ausgelegten Fundament aufgestellt. Mit anderen Worten sind Gasturbinenanordnung und Fundament jeweils derart aufeinander abgestimmt, dass bei der Montage eine Kollision von außen liegenden Komponenten der Gasturbinenanordnung mit dem Fundament sicher verhindert wird. Entsprechend passen Gasturbinenanordnungen einer ersten Bauart eines ersten Herstellers nicht auf ein Fundament, das für die Aufnahme einer Gasturbinenanordnung einer zweiten Bauart eines zweiten Herstellers ausgelegt wurde. Muss eine Gasturbinenanordnung eines Kraftwerks ausgetauscht werden, so entscheiden sich Kraftwerksbetreiber vor diesem Hintergrund in den meisten Fällen dafür, die neue Gasturbinenanordnung wieder über denjenigen Hersteller zu beziehen, der bereits die auszutauschende Gasturbinenanordnung geliefert hat, selbst wenn ein Angebot eines konkurrierenden Herstellers besser ist. Nur wenn von dem bisherigen Hersteller keine neue Gasturbinenanordnung mehr bezogen werden kann, weil dieser beispielsweise nicht mehr existent ist, wird auf das Angebot anderer Hersteller zurückgegriffen. In diesem Fall wird das alte Fundament durch ein neues Fundament ersetzt, das dann entsprechend wieder speziell an die neu zu montierenden Gasturbinenanordnung angepasst ist. Die Erneuerung eines Fundaments ist allerdings sehr zeitintensiv, so dass sie lange Ausfallzeiten des Kraftwerks zur Folge hat, was entsprechend hohe Kosten nach sich zieht. Darüber hinaus kann die Erneuerung eines Fundamentes zu einem Verlust der Betriebsgenehmigung führen, so dass ein neues Genehmigungsverfahren mit ungewissen Ausfallzeiten eingeleitet werden muss.

Das Dokument US 2010/162726 A1 offenbart eine Gasturbinenanordnung mit den technischen Merkmalen des Oberbegriffs von Anspruch 1.

Ausgehend von diesem Stand der Technik ist es eine Aufgabe der vorliegenden Erfindung, ein alternatives Verfahren der eingangs genannten Art zu schaffen, das es dem Kraftwerksbetreiber ermöglicht, eine Gasturbinenanordnung einer ersten Bauart durch solche einer zweiten Bauart zu ersetzen, ohne dadurch nennenswerte Nachteile zu erleiden.

Zur Lösung dieser Aufgabe schafft die vorliegende Erfindung ein Verfahren der eingangs genannten Art, das dadurch gekennzeichnet, dass in einem ersten Schritt Veränderungen an den Abblase- und/oder Entnahmeleitungen der Gasturbinenanordnung erster Bauart vorgenommen werden, und dass in einem zweiten Schritt die veränderte Gasturbinenanordnung auf dem bestehenden Fundament montiert wird. Dank der an den Abblase-und/oder Entnahmeleitungen vorgenommenen Veränderungen wird effektiv verhindert, dass die Gasturbinenanordnung mit einem Fundament, das grundsätzlich für die Aufnahme der Gasturbinenanordnung ungeeignet ist, kollidiert. Damit kann eine Gasturbinenanordnung erster Bauart durch eine solche einer anderen Bauart ersetzt werden, ohne dass es hierfür erforderlich ist, das bestehende Fundament zu verändern oder zu erneuern. Entsprechend sind trotz des Wechsels der Bauart keine zusätzlichen Ausfallzeiten des Kraftwerks oder Genehmigungsverfahren zu erwarten.

Bevorzugt wird der erste Schritt zumindest zum Großteil an einem anderen Ort als der zweite Schritt durchgeführt. Dadurch, dass die Veränderungen an den Abblase- und/oder Entnahmeleitungen nicht in situ am Ort der Montage vorgenommen werden, können Zeit und Kosten eingespart werden.

Gemäß des erfindungsgemäßen Verfahrens umfassen die im ersten Schritt durchgeführten Veränderungen eine Positionsverlagerung und/oder eine Veränderung des Leitungsverlaufs zumindest einer Abblase- und/oder Entnahmeleitung, eine Querschnitts- und/oder Außendurchmesserreduktion zumindest einer Abblase- und/oder Entnahmeleitung, eine Reduzierung der Dicke zumindest einer eine Abblase- und/oder Entnahmeleitung umgebenden Isolation, ein Ersetzen zumindest eines in eine Abblase- und/oder Entnahmeleitung integrierten Kompensators oder Kombinationen dieser Maßnahmen, wobei die Veränderungen insbesondere im Bereich der Brennkammer und/oder der Gasturbine durchgeführt werden.

Im Rahmen des ersten Schrittes können erfindungsgemäß ferner Veränderungen am Gehäuse der Gasturbinenanordnung vorgenommen werden, insbesondere in Form einer Verkleinerung von Gehäuseflanschen und/oder in Form von Veränderungen der Position von Gehäuseflanschen, über welche die Abblase- und/oder Entnahmeleitungen an das Gehäuse angebunden sind. Auf diese Weise lassen sich beispielsweise Abstände zwischen dem Gehäuse und den Abblase- und/oder Entnahmeleitungen verringern.

Ferner schafft die vorliegende Offenlegung eine Gasturbinenanordnung, die außerhalb des Umfangs der Ansprüche liegt, mit zumindest einem sich in einer Längsrichtung erstreckenden Gehäuse, einem Verdichter, einer Brennkammer und einer Gasturbine, die in der Längsrichtung hintereinander angeordnet sind, und einer Mehrzahl von außen entlang des Gehäuses geführten Abblase- und Entnahmeleitungen, die jeweils zumindest einen sich in Längsrichtung und im Wesentlichen parallel zum Gehäuse erstreckenden Leitungsabschnitt aufweisen und endseitig über Gehäuseflansche mit dem Gehäuse verbunden sind, wobei zumindest einige der Abblase- und Entnahmeleitungen einen nicht konstanten Außendurchmesser und/oder eine Isolierung nicht konstanter Dicke und/oder mehrere sich in Längsrichtung und im Wesentlichen parallel zum Gehäuse erstreckende Leitungsabschnitte aufweisen. "Im Wesentlichen parallel" soll vorliegend Winkelabweichungen von der Parallelität der Längsachsen beider Leitungsabschnitte von bis zu 15° beinhalten.

Bevorzugt weisen zumindest einige der Abblase- und Entnahmeleitungen im Bereich der Brennkammer und/oder der Gasturbine einen Leitungsabschnitt mit geringerem Außendurchmesser als in anderen Leitungsabschnitten und/oder einen Leitungsabschnitt mit geringerer Isolierungsdicke als in anderen Leitungsabschnitten und/oder einen sich in Längsrichtung und im Wesentlichen parallel zum Gehäuse erstreckenden Leitungsabschnitt auf, dessen Längsachse näher an dem Gehäuse angeordnet ist als die Längsachse eines anderen sich in Längsrichtung und im Wesentlichen parallel zum Gehäuse erstreckenden Leitungsabschnitts derselben Leitung.

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich. Darin ist
- Figur 1: eine schematische perspektivische Ansicht einer Gasturbinenanordnung an einer Position eines bestehenden Kraftwerks, an der zuvor eine Gasturbinenanordnung einer zweiten Bauart auf einem speziell für diese zweite Bauart ausgelegten Fundament montiert war;
- Figur 2: eine Seitenansicht der in Figur 1 gezeigten Gasturbinenanordnung;
- Figur 3: eine perspektivische Ansicht, die Abblase- und Entnahmeleitungen der in den Figuren 1 und 2 dargestellten Gasturbinenanordnung zeigt,
- Figur 4: eine perspektivische Ansicht, welche die in Figur 3 dargestellten Abblase- und Entnahmeleitungen in einem erfindungsgemäß überarbeiteten Zustand zeigt; und
- Figur 5: eine perspektivische Ansicht, welche die überarbeiteten Abblase- und Entnahmeleitungen im montierten Zustand zeigt.

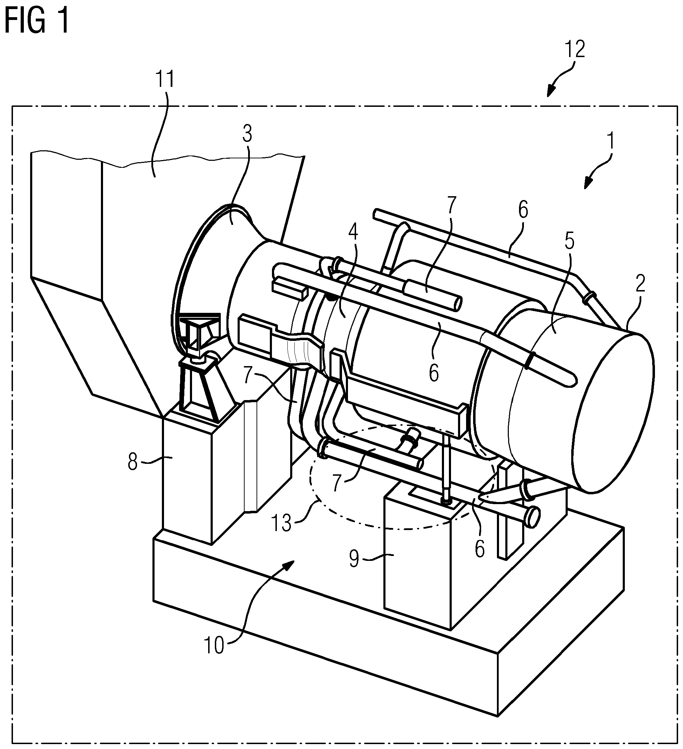

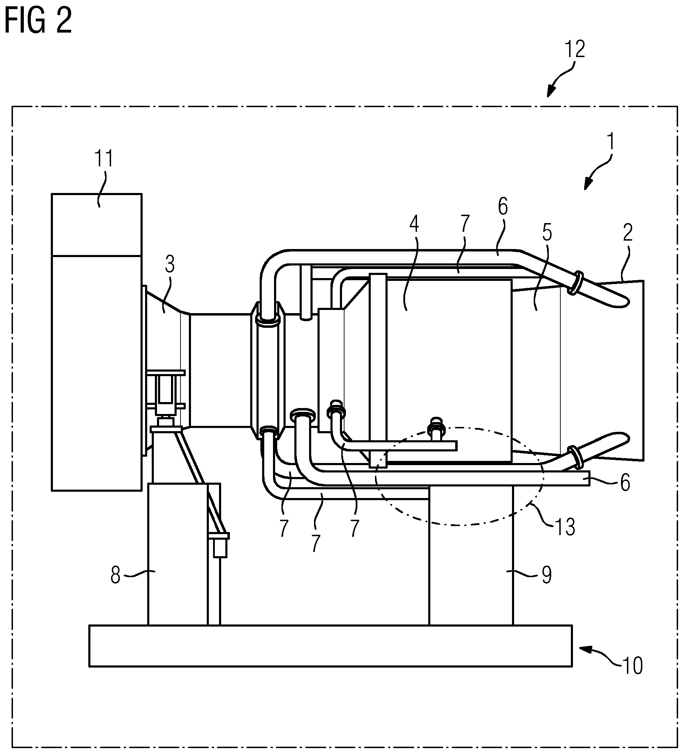

Die Figuren 1 und 2 zeigen eine Gasturbinenanordnung 1, bei der es sich um eine solche einer ersten Bauart eines ersten Herstellers handelt und die ein Gehäuse 2, das vorliegend aus mehreren Gehäuseteilen zusammengesetzt ist, einen Verdichter 3, eine Brennkammer 4, eine Gasturbine 5 sowie eine Mehrzahl von außen entlang des Gehäuses 2 geführten Abblaseleitungen 6 und Entnahmeleitungen 7 umfasst, die jeweils zumindest einen sich in Längsrichtung und im Wesentlichen parallel zum Gehäuse 2 erstreckenden Leitungsabschnitt aufweisen. Ferner zeigen die Figuren 1 und 2 ein zwei Fundamentblöcke 8 und 9 aufweisendes Fundament 10 sowie ein Andockhaus 11, bei denen es sich um Bestandteile eines bestehenden Kraftwerks 12 handelt. Das Fundament 10 ist speziell für eine nicht näher dargestellte Gasturbinenanordnung einer zweiten Bauart eines zweiten Herstellers ausgelegt, die zuvor an derjenigen Position montiert war, an der nun die Gasturbinenanordnung 1 erster Bauart eingezeichnet ist. Die Tatsache, dass das Fundament 10 nicht zur Aufnahme der Gasturbinenanordnung 1 erster Bauart vorgesehen ist, führt dazu, dass im unteren Bereich des Gehäuses 2 vorgesehene Abblaseleitungen 6 und Entnahmeleitungen 7 in dem mit der Bezugsziffer 13 gekennzeichneten Bereich unterhalb der Brennkammer 4 und der Turbine 5 mit dem in den Figuren 1 und 2 rechts dargestellten Fundamentblock 9 kollidieren würden, wenn die Gasturbinenanordnung 1 in der vorliegenden Form auf das Fundament 10 aufgesetzt werden würde. Vor diesem Hintergrund gibt es im Stand der Technik zwei Vorgehensweisen, um eine bestehende Gasturbinenanordnung durch eine neue Gasturbinenanordnung zu ersetzen. Die erste Vorgehensweise besteht darin, eine neue Gasturbinenanordnung gleicher Bauart zu verwenden, da diese auf das bestehende Fundament 10 aufgesetzt werden kann, ohne dass Teile der Gasturbinenanordnung mit diesem kollidieren. Soll als neue Gasturbinenanordnung eine solche anderer Bauart verwendet werden, so wird gemäß der zweiten Vorgehensweise das alte Fundament 10 entfernt und durch ein neues Fundament ersetzt, das speziell zur Aufnahme dieser Gasturbinenanordnung anderer Bauart ausgelegt ist.

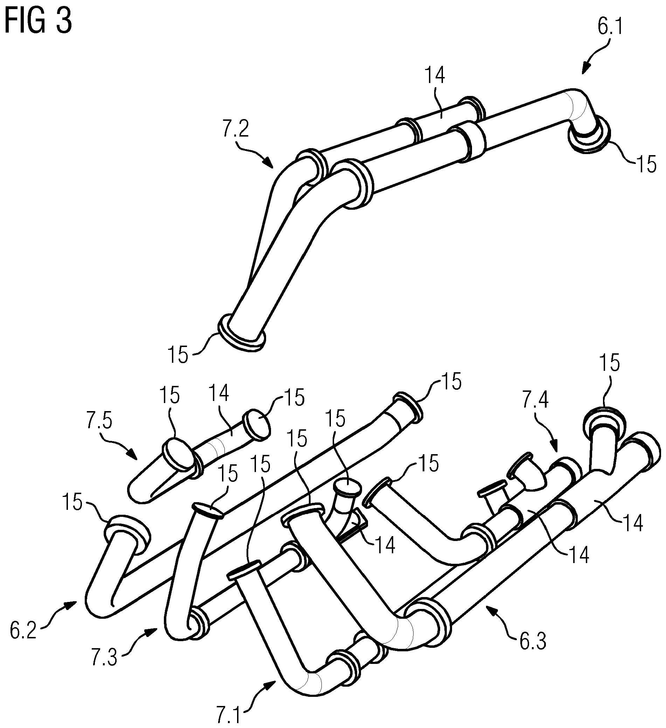

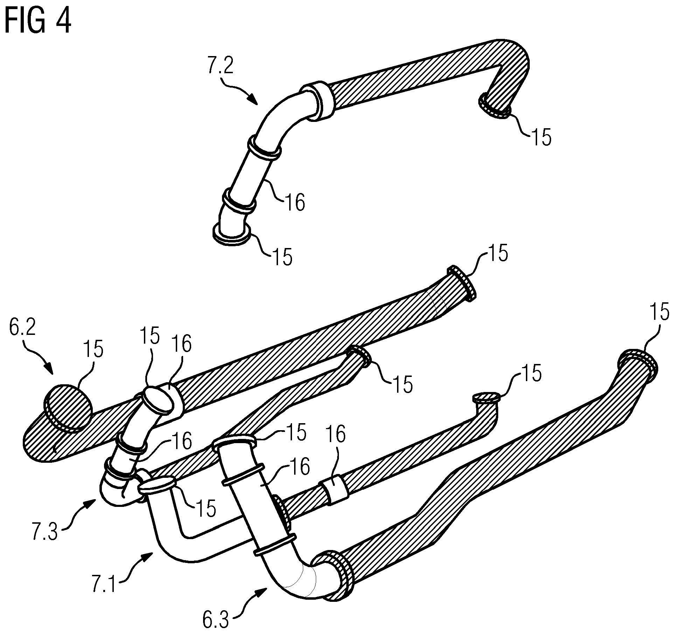

Nachfolgend wird unter Bezugnahme auf die Figuren 3 und 4 ein Verfahren gemäß einer Ausführungsform der vorliegenden Erfindung beschrieben, mit dem die in den Figuren 1 und 2 dargestellte Gasturbinenanordnung 1 erster Bauart auf dem bestehenden Fundament 10 montiert wird.

Figur 3 zeigt gesondert die Abblaseleitungen 6 und Entnahmeleitungen 7 der in den Figuren 1 und 2 dargestellten Gasturbinenanordnung 1 erster Bauart, genauer gesagt die Abblaseleitungen 6.1, 6.2 und 6.3 sowie die Entnahmeleitungen 7.1, 7.2, 7.3, 7.4 und 7.5. Sämtliche Leitungen 6, 7 sind mit axialen Kompensatoren 14 versehen, die dazu dienen, während des Betriebs der Gasturbinenanordnung 1 auftretende, in erster Linie thermisch bedingte Längenänderungen der Leitungen 6, 7 zu kompensieren.

In einem ersten Verfahrensschritt werden nun Veränderungen an zumindest einigen der in Figur 3 dargestellten Abblase- und Entnahmeleitungen 6, 7 vorgenommen, um eine Kollision dieser Leitungen mit dem Fundament 10 zu verhindern. Diese Veränderungen können grundsätzlich Positionsverlagerungen, Querschnitts- und/oder Außendurchmesserreduktionen, eine Verringerung der Dicke von Leitungen umgebenden Isolationen, ein Ersetzen von Kompensatoren oder Kombinationen dieser Maßnahmen umfassen, wobei sämtliche Maßnahmen auch nur an Bereichen der Leitungen durchgeführt werden können. Im vorliegenden Fall betreffen die im ersten Verfahrensschritt durchgeführten Änderungen die Abblaseleitungen 6.2 und 6.3 sowie die Entnahmeleitungen 7.1, 7.2 und 7.3. Figur 4 zeigt den veränderten Zustand dieser Leitungen nach der Durchführung des ersten Verfahrensschritts. Die Querschnitte bzw. Außendurchmesser sämtlicher der in Figur 4 Leitungen 6.2, 6.3, 7.1, 7.2 und 7.3 wurden in den mit der Bezugsziffer 15 gekennzeichneten und schraffiert dargestellten Bereichen reduziert. Ferner wurden an den in Figur 4 gezeigten Leitungen zumindest bereichsweise Positionsverlagerungen und/oder Veränderungen des Leitungsverlaufs durchgeführt. So weisen die Leitungen 6.3 und 7.3 beispielsweise nunmehr nicht nur eine sondern jeweils zwei sich in Längsrichtung und im Wesentlichen parallel zum Gehäuse 2 erstreckende Leitungsabschnitte auf, wobei die Längsachse des jeweils hinteren, im Bereich der Brennkammer 4 und der Gasturbine 5 positionierten Leitungsabschnitts näher an dem Gehäuse 2 angeordnet ist als die Längsachse des vorderen, im Bereich des Verdichters 3 positionierten, sich in Längsrichtung und im Wesentlichen parallel zum Gehäuse 2 erstreckenden Leitungsabschnitts derselben Leitung. Des Weiteren wurden bei einigen der in Figur 4 dargestellten Leitungen diejenigen Positionen verändert, an denen die Leitungen über Gehäuseflansche 15 mit dem Gehäuse 2 verbunden sind. Darüber hinaus wurden die Gehäuseflansche 15 zumindest teilweise im Querschnitt verkleinert. Zudem wurden die axialen Kompensatoren 14 durch neue, teilweise auch lateral wirkende Kompensatoren 16 ersetzt.

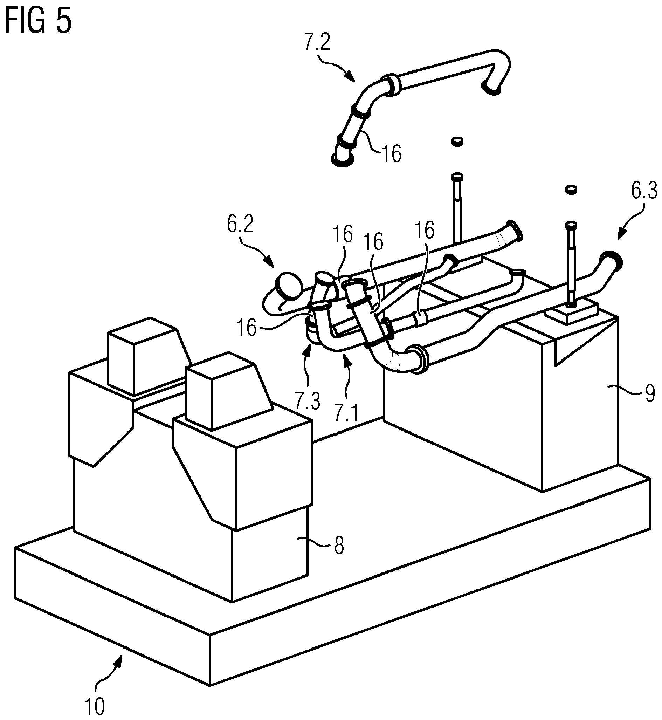

In einem zweiten Verfahrensschritt wird die Gasturbinenanordnung auf dem bestehenden Fundament 10 montiert. Hierzu wird eine Adapterkonstruktion eingesetzt, die zwei Adapterplatten 18 und 19 aufweist, welche auf die Fundamentblöcke 8 und 9 aufgesetzt und an diesen befestigt werden. Die Adapterkonstruktion dient dazu, unterschiedlichen Positionen und/oder eine unterschiedliche Anzahl von Ankerpunkten beider Bauarten von Gasturbinenanordnungen auszugleichen. Figur 5 zeigt, dass die Leitungen 6.2 und 6.3 sowie 7.1, 7.2 und 7.3 nun nicht mehr mit dem Fundament 10 bzw. mit dem Fundamentblock 9 kollidieren.

Das erfindungsgemäße Verfahren zeichnet sich insbesondere dadurch aus, dass eine Gasturbinenanordnung einer ersten Bauart durch eine Gasturbinenanordnung einer zweiten Bauart unter Beibehaltung des Fundaments ersetzt werden kann, obwohl dieses nur zur Aufnahme der Gasturbinenanordnung der zweiten Bauart ausgelegt wurde und eigentlich für die Aufnahme einer solchen erster Bauart ungeeignet ist, da es nicht den zur Aufnahme erforderlichen Bau- bzw. Montageraum zur Verfügung stellt. Dank des erfindungsgemäßen Verfahrens können somit Stillstandzeiten und Kosten vermieden werden, die mit einer Erneuerung des Fundaments einhergehen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Montage einer Gasturbinenanordnung (1) erster Bauart an einer Position eines bestehenden Kraftwerks (12), an der zuvor eine Gasturbinenanordnung einer zweiten Bauart auf einem speziell für diese zweite Bauart ausgelegten Fundament (10) montiert war,
wobei die Gasturbinenanordnung (1) zumindest ein Gehäuse (2), einen Verdichter (3), eine Brennkammer (4), eine Gasturbine (5) und eine Mehrzahl von außen entlang des Gehäuses geführten Abblase- und Entnahmeleitungen (6, 7) umfasst,
wobei in einem ersten Schritt Veränderungen an den Abblase-und/oder Entnahmeleitungen (6, 7) der Gasturbinenanordnung (1) erster Bauart vorgenommen werden, und
in einem zweiten Schritt die veränderte Gasturbinenanordnung (1) auf dem bestehenden Fundament (10) montiert wird,
**dadurch gekennzeichnet,**
**dass** die im ersten Schritt durchgeführten Veränderungen eine Positionsverlagerung und/oder eine Veränderung des Leitungsverlaufs zumindest einer Abblase-und/oder Entnahmeleitung (6, 7), eine Querschnitts-und/oder Außendurchmesserreduktion zumindest einer Abblase-und/oder Entnahmeleitung (6, 7), eine Reduzierung der Dicke zumindest einer eine Abblase- und/oder Entnahmeleitung (6, 7) umgebenden Isolation, ein Ersetzen zumindest eines in eine Abblase- und/oder Entnahmeleitung (6, 7) integrierten Kompensators (14) oder Kombinationen dieser Maßnahmen umfassen.

2. Verfahren nach Anspruch 1,
**dadurch gekennzeichnet,**
**dass** der erste Schritt zumindest zum Großteil an einem anderen Ort als der zweite Schritt durchgeführt wird.

3. Verfahren nach einem der vorhergehenden Ansprüche,
**dadurch gekennzeichnet,**
**dass** im Rahmen des ersten Schrittes ferner Veränderungen am Gehäuse (2) der Gasturbinenanordnung (1) vorgenommen werden, insbesondere in Form einer Verkleinerung von Gehäuseflanschen (15) und/oder in Form von Veränderungen der Position von Gehäuseflanschen (15), über welche die Abblase- und/oder Entnahmeleitungen an das Gehäuse (2) angebunden sind.

## Claims

1. Method for installing a gas turbine assembly (1) of a first design at a position of an existing power plant (12), at which position a gas turbine assembly of a second design was previously installed on a foundation (10) which is designed specifically for said second design,
wherein the gas turbine assembly (1) comprises at least one housing (2), a compressor (3), a combustion chamber (4), a gas turbine (5) and a plurality of bleed air and removal lines (6, 7) which are routed on the outside along the housing,
wherein,
in a first step, changes are made to the bleed air and/or removal lines (6, 7) of the gas turbine assembly (1) of a first design, and,
in a second step, the changed gas turbine assembly (1) is installed on the existing foundation (10), **characterized**
**in that** the changes which are carried out in the first step comprise a movement of position and/or a change in the line course of at least one bleed air and/or removal line (6, 7), a reduction in the cross section and/or external diameter of at least one bleed air and/or removal line (6, 7), a reduction in the thickness of at least one insulation means which surrounds a bleed air and/or removal line (6, 7), a replacement of at least one compensator (14) which is integrated into a bleed air and/or removal line (6, 7), or combinations of these measures.

2. Method according to Claim 1,
**characterized**
**in that** the first step is carried out at least for the most part at a different location than the second step.

3. Method according to either of the preceding claims,
**characterized**
**in that**, furthermore, changes to the housing (2) of the gas turbine assembly (1) are performed within the context of the first step, in particular in the form of a decrease in size of housing flanges (15) and/or in the form of changes in the position of housing flanges (15), via which the bleed air and/or removal lines are attached to the housing (2).

## Revendications

1. Procédé d'assemblage d'un agencement (1) de turbine à gaz d'un premier type de construction en une position d'une centrale (12) électrique existante, où auparavant un agencement de turbine à gaz d'un deuxième type de construction était monté sur une fondation (10) conçue spécialement pour ce deuxième type de construction,
dans lequel l'agencement (1) de turbine à gaz comprend au moins une enveloppe (2), un compresseur (3), une chambre de combustion (4), une turbine (5) à gaz et une pluralité de conduits (6, 7) d'échappement et de prélèvement passant à l'extérieur le long de l'enveloppe,
dans lequel
dans un premier stade on effectue des changements sur les conduits (6, 7) d'échappement et/ou de prélèvement de l'agencement (1) de turbine à gaz du premier type de construction, et
dans un deuxième stade on assemble l'agencement (1) de turbine à gaz modifié sur la fondation (10) existante,
**caractérisé**
**en ce que** les changements effectués dans le premier stade comprennent un changement de position et/ou une modification du tracé d'au moins un conduit (6, 7) d'échappement et/ou de prélèvement, une réduction de section transversale et/ou de diamètre extérieur d'au moins un conduit (6, 7) d'échappement et/ou de prélèvement, une réduction de l'épaisseur de l'isolation entourant un conduit (6, 7) d'échappement et/ou de prélèvement, un remplacement d'au moins un compensateur (14) intégré dans un conduit (6, 7) d'échappement et/ou de prélèvement ou une combinaison de ces mesures.

2. Procédé suivant la revendication 1,
**caractérisé**
**en ce que** l'on effectue le premier stade au moins pour la plus grande partie en un emplacement autre que celui où l'on effectue le deuxième stade.

3. Procédé suivant l'une des revendications précédentes, **caractérisé**
**en ce que** dans le cadre du premier stade, on effectue en outre des modifications de l'enveloppe (2) de l'agencement (1) de turbine à gaz, en particulier sous la forme d'un rapetissement de brides (15) de l'enveloppe et/ou sous la forme de modifications de la position de brides (15) de l'enveloppe, par lesquelles les conduits d'échappement et/ou de prélèvement sont reliés à l'enveloppe (2).
